# EUROPEAN PATENT APPLICATION

(11) **EP 4 137 943 A1**
(43) Date of publication of application: **22.02.2023**
(21) Application number: 21191418.9
(22) Date of filing: 16.08.2021
(51) Int. Cl.: G06F 9/445, G06F 21/57

(54) **CONTROL UNIT FOR IMPROVING A SOFTWARE BUILD PROCESS, METHOD AND COMPUTER PROGRAM**

(71) Applicant: Bayerische Motoren Werke Aktiengesellschaft, 80809 München (DE)
(72) Inventor: Cordeiro, Luiz, 82024 Taufkirchen (DE); Becker, Christian, 81735 München (DE); Wuttke, Nikola, 85716 Unterschleißheim (DE)

(57) **Abstract**

A control unit (30) for improving a software build process is provided. The control unit (30) comprises one or more interfaces (32) configured to communicate with a plurality of tools used for the software build process. Further, the control unit (30) comprises a processing circuitry (34) configured to control the one or more interfaces (32) and to determine the plurality of tools used for the software build process.

## Description

### Field

The present disclosure relates to the field of software build process. Embodiments relate to a control unit for improving a software build process, a method and a computer program.

### Background

A software build process is a process of converting source code file into standalone software artifacts, which can be run on a processing unit and is normally performed by use of different tools. The software build process is usually managed by a build tool, a program that coordinates and controls the other tools. However, when building a safety critical software, it must be verified that the tools were used corresponding to an expectation (e.g., due to qualification/mitigation procedures) and/or that the tools were not used in a way that violates their safety manual.

Functional Safety (FuSa) is the Software Engineering domain that deals with the processes and mechanisms that minimize the risk of a software component causing a failure that could lead to harm or death to either the direct users of the system or people on its environment. One of the important aspects covered by the FuSa domain is to make sure that the tools used for a software build process cannot introduce defects. This requirement demands that each and every tool used to build a resulting software used e.g., on a vehicle, or to assure the safety of such a car, may be evaluated for safety criticality, and that the ones considered critical go through a thorough qualification process.

In the art the verification that a tool was used in a proper way is performed either by a manual review of the software build process script (e.g., by reviewing a log-file of the software build process) or by running a parallel build system, such that the software is built twice, e.g., using different mechanism. Since a typical software build process in the state of the art involves many thousands of executions of different tools this is a time and/or resource consuming process to verify the integrity of the software build process. Thus, there may be a need to provide an improved concept for verifying a software build process.

### Summary

On large scale projects, with dozens, hundreds or thousands of engineers collaborating, a manual review may be in the best case incomplete and in the worst-case misleading, as the actual software build process may differ from the existing one when the manual review processes were performed.

The manual review approach tries to guarantee quality using the four-eyes principle, and a set of well-established guidelines defined by a domain expert. Although this approach may be valuable for small software builds it is also very error prone, especially if different engineers from different departments/locations are involved in the software build process. Therefore, for a large-scale project the manual review cannot guarantee a constant quality level for processes that rely on humans.

Furthermore, the parallel build approach leads to a highly resource intensive control mechanism for a large-scale project and is still also error prone, e.g., because of the effort necessary to duplicate the software build process and to keep both in sync since hundreds of changes in the software build process may be integrated each and every day.

It is therefore a finding that a software build process can be improved by determining tools used during the software build process. Thus, the tools used during the software build process can e.g., be monitored, which can lead to an improved verification of the software build process.

Examples provide a control unit for improving a software build process. The control unit comprises one or more interfaces configured to communicate with a plurality of tools used for the software build process and a processing circuitry configured to control the one or more interfaces and to determine the plurality of tools used for the software build process. Thus, the used tools can be determined in an improved way.

In an example, the processing circuitry may be further configured to determine if a tool of the plurality of tools used for the software build is relevant for a safety of a software generated with the software build process and if the tool is relevant for the safety of the software generated with the software build process to define a safety rule for usage of the tool during the software build process. Thus, a preselection of the tools can be performed, and only preselected tools can be addressed for further processing, e.g., defining/editing safety relevant parameter.

In an example, the processing circuitry may be further configured to assign an authorization to a user to define and/or edit a safety rule for a usage of the tool. Thus, only authorized person, such like a safety engineer (team) be enabled to define or edit the safety rule, preventing mishandling by an unskilled engineer (team).

In an example, the processing circuitry may be further configured to assign different authorizations to different users to define different safety rules for usage of different tools. Thus, every desired engineer (team) can receive a personalized authorization.

In an example, the processing circuitry may be further configured to determine if a tool of the plurality of tools used for the software build process was used correctly. Thus, the control unit can automatically identify an error during the software build process.

In an example, the processing circuitry may be further configured to determine if a version and/or a configuration of a tool of the plurality of tools used for the software build process is correct. Thus, the control unit can automatically identify an error during the software build process.

In an example, the processing circuitry may be further configured to determine whether each tool for which a safety rule is defined is used during the software build process. Thus, the control unit can automatically identify an error during the software build process.

In an example, the processing circuitry may be further configured to generate a hierarchy list of the plurality of tools used for the software build process. Thus, an overview of the tools used/invoked during the software build process can be provided.

Examples relate to a method for improving a software build process comprising performing a software build process using a plurality of tools and determining the plurality of tools during the software build process.

Examples further relate to a computer program having a program code for performing the method described above, when the computer program is executed on a computer, a processor, or a programmable hardware component.

### Brief description of the Figures

Some examples of apparatuses and/or methods will be described in the following by way of example only, and with reference to the accompanying figures, in which
Fig. 1 shows a block diagram of an example of a control unit; and
Fig. 2 shows an example of a method.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an 'or', this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

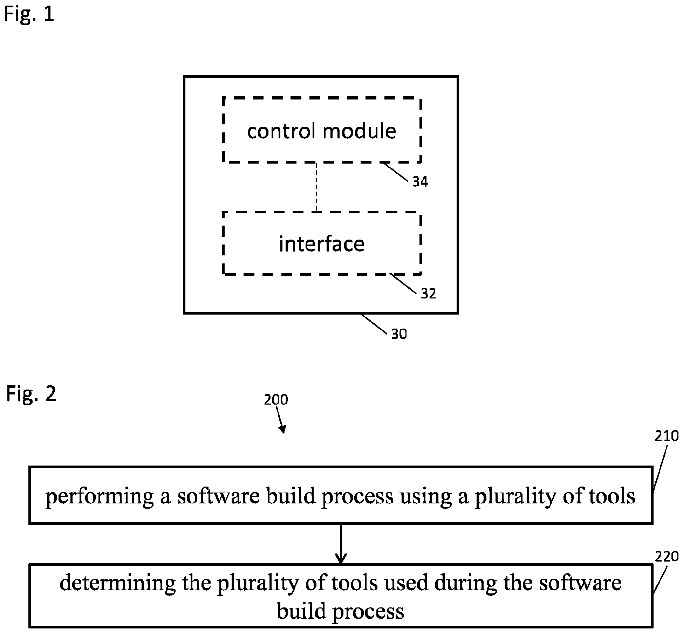

Fig. 1 shows a block diagram of an example of a control unit 30. The control unit 30 comprises one or more interfaces 32 configured to communicate with a plurality of tools used for the software build process and a processing circuitry 34 configured to control the one or more interfaces 32. Further, the processing circuitry 34 is configured to determine the plurality of tools used for the software build process. Thus, the plurality of tools used during the software build process can be detected and thus can be maintained/monitored.

For example, for a large-scale software build process dozens, hundreds, thousands or even more engineers (teams) may be responsible for a generation of a software utilizing the software build process, e.g., each engineer (team) may be responsible for a different aspect of the software build process. Thus, an engineer (team) A responsible for an aspect A may introduce a tool A without the knowledge of the other engineers (teams). The tool A may be not safety relevant, thus no further measure, e.g., assigning a safety rule to the tool A may be performed by the engineer (team) A. A further engineer (team) B responsible for an aspect B may introduce a tool B without the knowledge of the other engineers (teams), e.g., the engineer (team) A. The tool B may be not safety relevant, thus no further measure, e.g., assigning a safety rule to the tool B may be performed by the engineer (team) B. However, the combination of tool A and tool B may be safety relevant, thus at least one tool may become safety relevant, but since no engineer (team) A or B knows about the other tool no safety rules may be defined, which may lead to a FuSa break. By detecting the plurality of tools used during the software build process the engineer (team) A and/or the engineer (team) B can be informed about the usage of tool A and/or tool B and can assign a safety rule for the introduced tool, preventing a FuSa break. Thus, an integrity of the software build process can be increased.

For example, the engineer (team) A may be not aware of all safety relevancies of the tool A. Thus, the engineer (team) A may solely introduce the tool A without taking further care about safety relevant aspects. Thus, an administrator, such like a safety engineer (team), may be informed by the detection of the plurality of tools about the usage of tool A. Thus, an engineer (team) can introduce every desired tool without taking care about safety relevant aspects, since a safety engineer (team) can take care for this. Thus, the software build process is eased for different engineers (teams). Further, an administrator can maintain/monitor the software build process (e.g., the introduced tools) in an eased way.

Further, by determining the plurality of tools used during the software build process also indirectly invoked tools can be determined (which cannot be determined using a logfile, since the logfile does not show indirectly invoked tools). For example, the tool A may invoke a tool A' during the software build process. The engineer (team) may be not aware of the fact, that tool A invokes tool A'. Thus, by determining the plurality of tools used the engineer (team) A can be informed about this fact, e.g., enabling the engineer (team) A to define a safety rule for the tool A'. Thus, an integrity of the software build process can be improved.

Moreover, by determining the plurality of tools used during the software build process errors caused by users can be minimized. For example, the engineer (team) A may have forgot to assign a safety rule to the tool A. Thus, by determining the plurality of tools comprising tool A an administrator may be informed about the introduction of tool A and can e.g., inform the engineer (team) A about the missing safety rule of tool A.

The determination of the plurality of tools can be applied to every FuSa relevant software build process, e.g., in a period that is useful for an administrator, such like a project leader and/or safety engineer (team) to decide about the safety of the software build process. Thus, the project leader and/or safety engineer (team) is enabled in an eased way to maintain/monitor the software build process, since it is unlikely that the project leader and/or safety engineer (team) would be able to identify and cover all use-cases for the software build process without determining the plurality of tools. Especially the effort necessary to come up with a qualification test may be very high, and if meanwhile the use-case change (e.g., the use case of the software build with the software build process), the work might get invalidated, so in a constantly changing project, it might be very challenging to keep the qualification set up to date. Having a project "waiting" for a new version of the software build process to get qualified would impose unnecessary and harmful delays to the project. Thus, by determining the plurality of tools used for the software build process a maintaining/monitoring of the software build process can be improved.

For example, the determination of the plurality of tools may improve the software build process significantly, e.g., by enabling to detect an unexpected tool, which was introduced on the software build process, to determine if a tool was being used on its expected (and/or qualified) versions, to determine if a use of a tool did not violate its safety manual, to determine that the expected output artefact is produced and is valid and/or to determine that no unqualified functionality of a tool itself was used during the software build process.

As mentioned above the software build process may be managed by a build tool, which orchestrates the plurality of tools that transform the "raw material", that is, a source-code, into the "finished product", that is, binary executable code, e.g., a software. The build tool itself does not produce the changes to the artefacts, but rather relies on a set on underlying tools to do so. Therefore, an important aspect for the FuSa of the software build process is that the right tools have been used, and that they have been used in a safe way.

Instead of relying on the build tool itself to determine which tool it used, and how it was used, the control unit 30 utilizes the fact that whenever a tool is used a new process is created, e.g., on the Operating System (OS). Thus by introspect into the OS itself, the control unit 30 can determine the plurality of tools used for the software build process. For example, a tree of tools can be created as a result of the software build process invocation of the plurality of tools. Thus, advantageously the determination of the plurality of tools may be independent from a used build tool. Further, indirectly invoked tools can be determined (of which the build tool would not be aware). For example, as described above tool A may actually not perform an intended transformation but may rather call tool A' that does so (e.g., by setting up some environment constraints for tool A'). From a point of view of the build tool, it has absolutely no knowledge of tool A', but through the OS introspection performed by the control unit 30 the tool A' can be determined.

In an example, the processing circuitry 34 is further configured to obtain if a tool of the plurality of tools used for the software build process is relevant for a safety of a software generated with the software build process. If the tool is relevant for the safety of the software generated with the software build process the processing circuitry 34 is further configured to define a safety rule for usage of the tool during the software build process. Thus, a preselection, e.g., for an administrator can be done, leading to a decreased workload of the administrator, since the administrator can focus on the most likely safety relevant tools.

For example, if a tool is relevant for the safety of the software can be obtained based on a (received) user input, e.g., the engineer (team) A can assign a tool as safety relevant. Thus, the control unit 30 can determine a safety relevant tool based on the user input.

Optionally or alternatively, if a tool is relevant for the safety of the software can be obtained by determining all non-safety relevant tools. For example, the control unit may determine if a tool is non-safety relevant and if the control unit 30 cannot determine a tool as non-safety relevant the tool is automatically assigned as safety relevant. This does not necessarily mean that each tool assigned safety relevant is in fact safety relevant, but it enables a first preselection of the plurality of tools, e.g., leading to a decreased workload of an administrator.

Optionally or alternatively, if a tool is relevant for the safety of the software can be obtained by determining safety-relevant tools by use of a database. For example, the database can comprise information that each tool A and tool B is non-safety relevant and that for the combination of tool A and tool B at least one tool becomes safety relevant. Thus, by detecting, e.g., the usage of the tool A and tool B the control unit 30 can assign both tools as safety relevant. Again this does not necessarily mean that each tool assigned safety relevant is in fact safety relevant, but it enables a first preselection of the plurality of tools, e.g., leading to a decreased workload of an administrator.

Optionally or alternatively, if a tool is relevant for the safety of the software can be obtained by use of the tree of tools. For example, an introduced tool A may be listed in the tree of tool between a safety relevant tool 0 and a further safety relevant tool 1 (e.g., tool 0 is invoked by a build tool and invokes tool A, which invokes tool 1) reflecting an order of invocation of each tool. Since tool A is invoked between two safety relevant tools tool A may be assigned as safety relevant.

In an example, the processing circuitry 34 may be further configured to assign an authorization to a user to define and/or edit a safety rule for usage of the tool. Thus, the user can define and or edit the safety rule. For example, an engineer (team) can be assigned an authorization for each tool the engineer (team) introduced into the software build process. Further, for example, a safety engineer (team) may be specialized on an aspect of the software build process and only for this aspect the authorization can be assigned, e.g., tools which are processed in a fixed order after each other.

For example, the safety rule of a tool can be defined/edited by a generic assertion mechanism, e.g., using a domain specific language (DSL). Normally a vendor of a tool may provide a tool to be used in a safety critical environment and might decide to limit the options that the tool can be used with. For example, the vendor might specify a set of options that must never be used, a set of options that are known to be safe, and therefore can be used, mutually exclusive sets of options, each of which can be used separately, but never in combination or no parameter other than the ones explicitly allowed shall be used. These set of options of how a tool can be used on a safety critical environment is usually compiled into a safety manual for the tool.

The control unit 30 may allow an engineer (team) to configure any tool of the plurality of tools using DSL. This allows the engineer (team) to encode these safety rules directly, e.g., on the corresponding mechanism configuration file. For example, for a compiler with GCC semantics for a responsible tool (e,g., a build tool responsible at least for a part of the software build process) a configuration of a safety rule could be created (e.g., by the control unit 30) such as:
1 MustContain(['-c', '-o (.^{∗})']) AND
2 MustNotContain(['-l(.^{∗})', '-L(.^{∗})', '-Wl,(.^{∗})']) AND
3 MayContain(['-g', '-Wall', '-Wextra']) AND
4 XorParams(['-O0', '-O1', '-O2', '-Os']) AND
5 IncludeDirsPattern('.^{∗}/intel/?([^/]^{∗})') AND
6 InputFilePattern(".^{∗}\.c(c|pp)?", IgnoreCase=True) AND
7 NoRemainingParams

In line 1 the responsible tool may configure a compilation (not a linking) step. In line 2-7 a usage of the tool may be defined/specified by different parameters corresponding to different aspects. For example, line 2 may prevent the usage of third-party libs, line 3 allows the usage of a debugging symbol, line 4 allows four different optimization levels, meaning they are not relevant for the safety of this component, line 5 may specify the allowed include directories for header files and line 6 may specify the input files pattern. Further, line 7 may specify that no other parameters are allowed for the call/invocation of the tool. By defining this parameter every invocation of the (responsible) tool during the software build process can be maintained. Thus, these parameters reflect the safety rule for the (responsible) tool. In principle, for each invocation of the (responsible) tool of the plurality of tools this whole expression has to be held true (all parameters have to be fulfilled). It is understood that the use of DSL for generation safety rule(s) is not restricted to GCC semantic and can be also used for further compilers, e.g., for automotive grade proprietary compilers' semantics. Furthermore, it is understood that use of DSL is not restricted to compiler and linker and can be also used for further safety critical tools.

By allowing an engineer (team) to create a set of assertions comprised in a safety rule that shall be applied to the way each tool was used/invoked during the software build process and by determining the plurality of tools a generic mechanism (independent of the build too) to guarantee the safety of a tool usage can be provided (also referred as assertion-based tool usage proofing). For example, a safety rule can be used to validate how a tool was used, e.g., to detect if a tool was not configured, was used in a wrong version, was configured but not used etc. This way the safety rule may allow an easy access to maintain/monitor all used/invoked tools during the software build process, especially using an easy access provided by DSL.

For example, assertion-based tooling usage proof means that for a software build system, which is an orchestration mechanism that shall use other tools to perform transformations from a source-code into binary executable code, a correctness can indirectly be proven by proving that the plurality of tools has been used, especially that they have been used following their safety rules. The technique of assertion-based tooling usage proof can also be used for proving security aspects of the software build process (make sure no exploits have been hidden in the toolchain).

Further, the utilization of a safety rule may allow to scale the software build process. For example, an engineer (team) A (e.g., an expert for a used tool A) may use his knowledge to express information about a tool A with a safety rule, e.g., how the tool A should be used. This safety rule can then be used for every further invocation of tool A. Thus, for a software build process with multiple invocations of tool A the safety rule may only be required to be defined once and can be used multiple times. This way a scalability of the software build process may be greatly increased.

Furthermore, by defining a safety rule for each tool of the plurality of tools the integrity of the software build process can be verified in an improved way. This way it can be assured that no defect is introduced into the software, e.g., by a build tool itself. Thus, the instrumentation/orchestration of the tools (e.g., by a build tool) used for the software build process can be monitored. This advantageously may improve an automatization of the software build process, may increase a flexibility to use one or more tools and may improve a cost efficiency of the software build process.

In an example, the processing circuitry 34 may be further configured to assign different authorizations to different users to define different safety rules for a usage of different tools. Thus, different engineers (teams) may be assigned different responsibilities for defining/editing the safety rule. For example, on software development projects, as if one has thousands of engineers (teams) working on the project, it may be impossible for a centralized group (such like a project leader) to understand and maintain the necessary configuration of invariants and assertions to prove the whole project safe. By assigning different authorizations to different users a FuSa-assertion as code can be provided, e.g., following the same development process that is used for the functional code itself. Thus, an entrance barrier for using the proposed control unit 30 may be reduced/omitted (and it may also be guaranteed that any change to the FuSa assertion as code will follow the four-eyes principle.). For example, the control unit 30 enables an engineer (team) to do the configuration required (e.g., defining a safety rule), so that a distributed configuration model for different engineers (teams) is achieved.

In an example, the processing circuitry 34 may be further configured to determine if a tool of the plurality of tools used for the software build process was used correctly. Thus, the control unit 30 can provide a feedback if the integrity of the software build process may be reduced. For example, a tool which was not correctly used (e.g., at least on time invoked incorrectly) during the software build process can be highlighted in the tree of tools. Thus, an engineer (team) can be informed in an eased way about a possible decrease in the integrity of the software build process.

In an example, the processing circuitry 34 may be further configured to determine if a version and/or a configuration of a tool of the plurality of tools used for the software build process is correct. Thus, the control unit 30 can provide a feedback if the integrity of the software build process may be reduced. For example, an invoked tool which has a wrong version and/or configuration can be highlighted in the tree of tools. Thus, an engineer (team) can be informed in an eased way about a possible decrease in the integrity of the software build process.

This automated version proofing may leverage the integrity of the software build process. For example, by introspecting into the OS view of processes created by invoked tools every binary used on the software build process can be identified. Thus, means can be provided for each tool of the plurality of tools to prove that this particular binary is on a qualified version. For example, the means can provide a hash function of the binary (and auxiliary libraries if needed) corresponding to the expected one. This has a side benefit of also preventing malicious tempering with a tool. For example, a modification of one bit of a tool (e.g., to try to make it produce erroneous output, to gain access to the software build process environment, or to spy) would change the binary's hash function, and thus, could be detected by the control unit 30. As the hash function method used is of cryptographic quality it provides an extreme high level of confidence on tooling usage. For example, means can be provided for invoking a tool, asking it for its version and comparing it against the expected version or for providing a custom-made script for tooling validation.

In an example, the processing circuitry 34 may be further configured to determine whether each tool for which a safety rule is defined is used during the software build process. Thus, an indirect control mechanism for the integrity of the software build process can be provided, assuming that each tool with assigned safety rule is necessary for the software build process. So, if not each tool with assigned safety rule is invoked during the software build process this may indicate an error during the software build process, which can be detected by determining the usage of the plurality of tools.

In an example, the processing circuitry 34 may be further configured to generate a hierarchy list of the plurality of tools used for the software build process. For example, the tree of tools can be the hierarchy list. For example, the hierarchy list may provide the plurality of tools in an order corresponding to different engineers (teams), different responsibilities, different times of invocation during the software build process, etc.

One advantage of the tree of tools (e.g., the hierarchy list) is that the tree of tools may allow an engineer (team) to make an assertion at any level of the tree. For example, for a given execution path (a path into the tree of tools) like "build system" → "linking wrapper script" → "compiler interface program" → "linker", the program performing the transformation (from a source-code, into the software) is the linker. However, an engineer (team) performing the transformation do not use the linker directly. Usually the engineer (team) usually uses the compiler interface program that then adapts the parameters passed and invokes the linker. Due to this fact, a safety manual for the tool would describe how to use the compiler interface program, not the underlying linker, and not the linking wrapper script (which may be unknown to a tool vendor). Therefore, by determining the plurality of tools used during the software build process and summarizing the plurality of tools in a tree of tools it allows configuring exactly the component on a given path which should be evaluated. Therefore, in a case like this, the engineer (team) responsible for making sure that a linker usage is safe is able to tell a validation program to apply the configured assertions to the compiler interface program.

Further, the tree of tools can be utilized to inform different engineers (teams) about different (new) introduced tools. For example, the tree of tools may comprise a section A and a second B, wherein all safety rules for section A were defined by an engineer (team) A and all safety rules for section B were defined by an engineer (team) B. Thus, if a tool is introduced into the section A only the engineer (team) A (and not engineer (team) B) can be informed about the tool introduction, since they may know the best about the applied safety rules in the section A. This way, an engineer (team) can be only informed about changes in the software build process corresponding to their actual task, responsibilities, etc.

Optionally, the engineer (team) A can be assigned automatically authorization to define/edit safety rules for each tool in the section A. For example, the control unit 30 may determine a tool introduced into the section A and will automatically assign authorization to define/edit the safety rule of this tool (if necessary) to the engineer (team) A.

As shown in Fig. 1 the respective one or more interfaces 32 are coupled to the respective processing circuitry 34 at the control module 30. In embodiments the processing circuitry 34 may be implemented using one or more processing units, one or more processing devices, any means for processing, such as a processor, a computer or a programmable hardware component being operable with accordingly adapted software. Similar, the described functions of the processing circuitry 34 may as well be implemented in software, which is then executed on one or more programmable hardware components. Such hardware components may comprise a general-purpose processor, a Digital Signal Processor (DSP), a micro-controller, etc. The processing circuitry 34 is capable of controlling the interface 32, so that any data transfer that occurs over the interface and/or any interaction in which the interface may be involved may be controlled by the processing circuitry 34.

In an embodiment the control unit 30 may comprise a memory and at least one processor 34 operably coupled to the memory and configured to perform the below mentioned method.

More details and aspects are mentioned in connection with the embodiments described above or below. The example shown in Fig. 1 may comprise one or more optional additional features corresponding to one or more aspects mentioned in connection with the proposed concept or one or more examples described below (e.g., Fig. 2).

Fig. 2 shows an example of a method 200. The method 200 performing 210 a software build process using a plurality of tools and determining 220 the plurality of tools used during the software build process. For example, performing 210 and determining 220 may be performed by a control unit as described with reference to Fig. 1.

In an example, a tree of tools is generated by performing the method 200. After the generation of the tree of tools a verification can be performed, to verify whether each tool was used correctly. This verification can be performed as described above using a DSL and defining/editing a safety rule for each tool, providing an improved access for an engineer (team).

The method 200 may guarantee a software build process integrity of a safety critical software component, by automated quality verification of pre and post conditions of the build, including assertion-based tooling usage proofing (as described with reference to Fig. 1).

The assertion-based tooling usage proofing may be based on proving pre and post conditions of the software build process environment to assert whether the software build system behaved correctly (this technique is also referred as design by contract development). This way the method 200 can prove that the integration of thousands or millions of such functionalities provided by the plurality of tools, when built together to form a coherent software system, has been performed in a correct way.

The idea is, that in principle given the amount of possible execution paths in a given software build process (e.g., invocation of thousands of tools), it is nearly impossible to guarantee that all of them are free of defects. Instead, by determining 220 the plurality of tools used and assigning safety rules it can be proven that the system state has some properties before the process has been undertaken, and also that the system state has the same or other properties after the process has been undertaken. If both holds true, then it is safe to state that the software build process itself did not introduce a defect.

Thus, method 200 can be advantageously automated, and therefore added to a continuous integration process. This may guarantee that a safety violation can be detected before it is added to a software, e.g., a software's mainline and a consistent quality on all software components and can allow scalability, e.g., for large projects. Further, the method 200 may be (platform) agnostic and therefore can be easily reused for different projects using different software build process technologies. Another advantage of the method 200 is the that a defect may be detected before it is integrated into the software, which minimizes the cost of fixing such a defect.

Pre-conditions that can be verified are, e.g.:
The software build process environment may be composed with the expected source code version, and this version can be uniquely identified through a known semantic model. In concrete terms, the software may be controlled by a software configuration management system and this system may allow to uniquely identify a set of source code, for instance, through the usage of tags.

No source code external to the intended set may be present on the software build process environment.

Partial constructions that could be reused by the software build system, can been eliminated, to prevent the possibility of a partial construction being erroneously identified by the build system as a candidate for reuse.

Post-conditions that can be verified are, e.g.:
The source code has not been modified in any way during the software build process.

The tool that has been used has been verified to be in a known, qualified version. As a side effect, this verification can also detect an attempt to exploit the security of the build system through the introduction of mangled tools.

The tooling execution has not violated their safety manuals, through the application of a rulebased mechanism to the tool's invocation logs (e.g., obtained in a tool-agnostic way).

The expected output artefacts have been generated by the build, which can be proven by proving that their creation timestamp is newer than the software build process invocation timestamp, and that their contents reflect the expected format.

The method 200 fulfils the requirements of ISO26262 normative, including its application to ASIL-D components. Further, the method 200 can be fully automated, which allows for its application onto a continuous integration process, which allows for consistent quality levels on all components, no matter how large the software system under test is. By virtue of being automated, it's feasible to apply it to each and every FuSa relevant build, and thus, a possible dichotomy between when a manual review was conducted to the real software build process environment of a software put into a vehicle.

More details and aspects are mentioned in connection with the embodiments described above. The example shown in Fig. 2 may comprise one or more optional additional features corresponding to one or more aspects mentioned in connection with the proposed concept or one or more examples described above (e.g., Fig. 1).

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

If some aspects have been described in relation to a device or system, these aspects should also be understood as a description of the corresponding method and vice versa. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

### List of reference signs

- 30: control unit
- 32: one or more interfaces
- 34: processing circuitry
- 200: method for improving a software build process
- 210: performing a software build process
- 220: determining the plurality of tools

## Claims

1. A control unit (30) for improving a software build process, comprising
one or more interfaces (32) configured to communicate with a plurality of tools used for the software build process; and
processing circuitry (34) configured to control the one or more interfaces (32) and to determine the plurality of tools used for the software build process.

2. The control unit (30) according to claim 1, wherein
the processing circuitry (34) is further configured to:
obtain if a tool of the plurality of tools used for the software build is relevant for a safety of a software generated with the software build process; and
if the tool is relevant for the safety of the software generated with the software build process define a safety rule for usage of the tool during the software build process.

3. The control unit (30) according to claim 1 or 2, wherein
the processing circuitry (34) is further configured to assign an authorization to a user to define and/or edit a safety rule for usage of the tool.

4. The control unit (30) according to any of the preceding claims, wherein
the processing circuitry (34) is further configured to assign different authorizations to different users to define different safety rules for a usage of different tools.

5. The control unit (30) according to any of the preceding claims, wherein
the processing circuitry (34) is further configured to determine if a tool of the plurality of tools used for the software build process was used correctly.

6. The control unit (30) according to any of the preceding claims, wherein
the processing circuitry (34) is further configured to determine if a version and/or a configuration of a tool of the plurality of tools used for the software build process is correct.

7. The control unit (30) according to any of the preceding claims, wherein
the processing circuitry (34) is further configured to determine whether each tool for which a safety rule is defined is used during the software build process.

8. The control unit (30) according to any of the preceding claims, wherein
the processing circuitry (34) is further configured to generate a hierarchy list of the plurality of tools used for the software build process.

9. A method (200) for improving a software build process comprising
performing (210) a software build process using a plurality of tools; and
determining (210) the plurality of tools used during the software build process.

10. A computer program having a program code for performing the method (200) according to claim 9, when the computer program is executed on a computer, a processor, or a programmable hardware component.
